# EUROPÄISCHE PATENTSCHRIFT

(11) **EP 3 056 882 B1**
(45) Veröffentlichungstag und Bekanntmachung des Hinweises auf die Patenterteilung: **12.02.2020**
(21) Anmeldenummer: 15154990.4
(22) Anmeldetag: 13.02.2015
(51) Int. Cl.: G01K 1/02, G01K 11/26

(54) **Verfahren zur Messung einer Temperatur innerhalb eines Küchengerätes**
Method for measuring a temperature within a kitchen appliance
Procédé de mesure d'une température dans un appareil de cuisine

(43) Veröffentlichungstag der Anmeldung: 17.08.2016
(73) Patentinhaber: Vorwerk & Co. Interholding GmbH, 42275 Wuppertal (DE)
(72) Erfinder: Koetz, Hendrik, 58300 Wetter (DE); Fricke, Christopher, 42119 Wuppertal (DE); Hilgers, Stefan, 45357 Essen (DE); Könnings, Maximilian, 8032 Zürich (CH); Koch, Arno, 8832 Wollerau (CH); Resende, Maria Jose, 1500-431 Lissabon (PT); Hackert, Georg, 44869 Bochum (DE)
(74) Vertreter: Müller, Enno

(56) Entgegenhaltungen:
- EP-A1- 1 577 653
- WO-A1-2012/171242
- DE-A1-102005 015 028

## Beschreibung

Die Erfindung betrifft ein Verfahren sowie ein System zur Messung einer Temperatur innerhalb eines Küchengerätes, nach Anspruch 1 bzw. 9.

Messverfahren der vorgenannten Art sind im Stand der Technik bekannt. Es existieren sowohl Messverfahren, bei welchen die Übermittlung des Anregungssignals bzw. des Antwortsignals kabelgebunden erfolgt, als auch Messverfahren, bei welchen die Übermittlung kabellos, beispielsweise per Funk, erfolgt.

Zu den kabelgebundenen Messverfahren gehören bspw. Verfahren, welche von kabelgebundenen Temperaturfühlern wie Thermoelementen oder Thermistoren Gebrauch machen. Diese Messverfahren sind bspw. zur Messung von Temperaturen innerhalb eines Backofens bekannt. Nachteilig ist dabei, dass der Temperaturfühler in den Backofen eingebaut ist und das Kabel durch die Dichtungen des Küchengerätes geführt werden muss. Dies ist zum einen bezüglich der Herstellung aufwendig und zum anderen für den Nutzer des Küchengerätes unkomfortabel.

Daneben sind kabellose Messverfahren bekannt. Aus der DE 10 2005 015 028 A1 ist beispielsweise ein kabelloser Temperatursensor auf der Basis von Oberflächenwellen bekannt. Für eine Temperaturmessung werden Oberflächenwellenbauelemente durch hochfrequente elektromagnetische Wellen zur Schwingung angeregt, wobei aufgrund der Temperaturabhängigkeit der von den Oberflächenwellenbauelementen zurückgesendeten elektromagnetischen Wellen auf die Garguttemperatur geschlossen werden kann. Die hochfrequenten elektromagnetischen Signale werden mittels einer Sende-Empfangs-Einrichtung an den Temperatursensor gesendet. Die von dem Temperatursensor als Antwortsignal zurückgesendeten Wellen werden von der Sende-Empfangs-Einrichtung empfangen und an eine Auswerteeinrichtung weiter geleitet. Um von den empfangenen Signalen möglichst genau auf die Garguttemperatur schließen zu können, wird pro Temperaturmessung, also pro Messdurchlauf, ein definiertes Frequenzband durchlaufen. Anhand der frequenzabhängigen Signalintensitäten der empfangenen Antwortsignale kann dann die Resonanzfrequenz ermittelt und daraus wiederum auf die Garguttemperatur geschlossen werden. Die Garguttemperatur wird anschließend entweder auf einem Display des Backofens angezeigt oder zur Regelung eines Garprozesses innerhalb des Backofens verwendet. Nachteilig ist dabei, dass das Messergebnis nur dem Backofen selbst zur Verfügung steht.

Aus der EP 1 577 653 A1 ist es bekannt, eine in einem Küchengerät gemessene Temperatur auf eine Empfangseinheit außerhalb des Küchengerätes zur Fernüberwachung durch eine Person zu übertragen.

Es ist daher Aufgabe der Erfindung, ein Verfahren sowie ein System zur Messung einer Temperatur innerhalb eines Küchengerätes zu schaffen, welches nicht nur auf ein einziges Küchengerät beschränkt ist, sondern auch eine Interaktion zwischen mehreren Küchengeräten ermöglicht. Darüber hinaus soll das System komfortabel herstellbar und verwendbar sein.

Zur Lösung wird zunächst ein Verfahren geschaffen, bei welchem die Sende-Empfangs-Einrichtung Teilinformationen des Antwortsignals an eine Steuereinrichtung eines weiteren, zweiten Küchengerätes zur Weiterverwendung in dem zweiten Küchengerät übermittelt und die Küchengeräte abgestimmt so gesteuert werden, dass eine möglichst kurze Gesamtzubereitungszeit für die Zubereitung einer Speise entsteht.

Gemäß der Erfindung wird also das Antwortsignal oder die aus dem Antwortsignal ermittelte aktuelle Temperatur nicht bzw. nicht nur zur Regelung des Garprozesses innerhalb desselben Küchengerätes verwendet, sondern sie steht auch dem zweiten Küchengerät zur Verfügung. Dadurch kann bspw. eine innerhalb eines ersten Küchengerätes, bspw. eines Backofens, gemessene Temperatur einem zweiten Küchengerät, bspw. einem elektrischen Kochmixgerät zur Verfügung gestellt werden, so dass abhängig von der aktuellen Temperatur eines in dem ersten Küchengerät befindlichen Gargutes ein Verfahrensschritt in dem zweiten Küchengerät bewirkt wird. Bspw. kann bei Erreichen einer bestimmten Garguttemperatur eine Heizeinrichtung des zweiten Küchengerätes aktiviert werden, um ein später benötigtes Zubereitungsgefäß vorzuheizen. Dadurch werden das erste und zweite Küchengerät aufeinander abgestimmt so gesteuert, dass eine möglichst kurze Gesamtzubereitungsdauer für die Zubereitung einer Speise entsteht. Ebenso lassen sich dadurch Zubereitungsprozesse vollautomatisch steuern, auch wenn diese mit unterschiedlichen Küchengeräten durchgeführt werden. Insgesamt ist eine Speisenzubereitung somit für den Nutzer besonders einfach, zeitsparend und komfortabel durchführbar.

Zusätzlich kann auch vorgesehen sein, dass die gemessene aktuelle Temperatur auf einem Display des ersten Küchengerätes, des weiteren Küchengerätes oder einem externen Rechner angezeigt wird. Der externe zur Weiterverwendung in einem oder mehreren weiteren Küchengeräten Rechner kann bspw. ein Rechner eines mobilen Endgerätes wie eines Laptops oder eines Smartphones sein.

Gemäß einer Variante wird die aktuelle Temperatur, das Antwortsignal oder auch bloß Teilinformationen des Antwortsignals nicht direkt an ein weiteres Küchengerät übermittelt, sondern vielmehr entweder ausschließlich an den exexternen Rechner oder zuerst an den externen Rechner und dann von diesem - bearbeitet oder unbearbeitet - , an das zweite Küchengerät.

Gemäß der Erfindung kann die Sende-Empfangs-Einrichtung bloß Teilinformationen des Antwortsignals direkt an das zweite Küchengerät oder an den externen Rechner übermitteln In diesem Fall erfolgt die Auswertung der Teilinformationen nicht durch die Sende-Empfangs-Einrichtung sondern durch das weitere Küchengerät oder durch den externen Rechner. Die Teilinformationen des Antwortsignals können dabei bspw. alle gemessenen Signalintensitäten mit dazugehörigen Frequenzen sein oder auch eine Information über die Frequenz eines intensitätsstärksten Antwortsignales. Alternativ ist es jedoch auch möglich, dass bereits die Sende-Empfangs-Einrichtung die Auswertung durchführt und nur das Ergebnis, d. h. die ermittelte aktuelle Temperatur, an das weitere Küchengerät oder an den externen Rechner übermittelt.

Die Erfindung ist nicht auf Messverfahren beschränkt, welche auf der Grundlage von Oberflächenwellen funktionieren. Vielmehr kann die Temperatur auch mittels anderer elektromagnetischer Messverfahren erfolgen, bei welchen ein Anregungssignal von der Sende-Empfangs-Einrichtung ausgesendet wird, ein in dem Küchengerät bzw. in dem Gargut angeordneter Temperatursensor das Anregungssignal empfängt und daraufhin ein temperaturabhängiges Antwortsignal aussendet. Die Ermittlung der aktuellen Temperatur erfolgt dabei stets wie vorgeschlagen durch einen Vergleich des durch die Sende-Empfangs-Einrichtung empfangenen Antwortsignals mit temperaturabhängigen Referenzsignalen. Dasjenige Referenzsignal, welches hochgradig ähnlich oder identisch mit dem gemessenen Antwortsignal ist, lässt einen Rückschluss auf die aktuelle Temperatur zu.

Insbesondere wird vorgeschlagen, dass das Anregungssignal temperaturabhängige akustische Oberflächenwellen in dem Temperatursensor anregt, wobei diese akustischen Oberflächenwellen Teil des von dem Temperatursensor gesendeten Antwortsignals sind. Damit macht die Erfindung Gebrauch von akustischen Oberflächenwellensensoren, deren Resonanzfrequenz abhängig von der aktuellen Temperatur ist. Die akustischen Oberflächenwellensensoren (SAW-Sensoren) sind passive Bauteile, welche mittels einer integrierten Antenne einen Teil eines empfangenen Anregungssignals zurücksenden, nachdem das Anregungssignal durch die SAW-Struktur gelaufen ist. Durch die individuelle Ausbildung der Bauteil-Strukturen weist jedes Bauteil für eine bestimmte Temperatur eine bestimmte Resonanzfrequenz auf. Die Antwortsignale werden mittels der Antenne zurückgesendet und können von der Sende-Empfangs-Einrichtung empfangen werden.

Es wird vorgeschlagen, dass zeitlich aufeinanderfolgend eine Mehrzahl von Anregungssignalen mit voneinander abweichenden Frequenzen eines definierten Frequenzbandes gesendet wird. Durch die Anzahl der gesendeten Anregungssignale kann die Messgenauigkeit erhöht werden. Es empfiehlt sich zudem, die gesendeten Frequenzen in Abhängigkeit von den erwarteten aktuellen Temperaturen zu wählen. Je größer zudem die Anzahl der in dem definierten Frequenzband verwendeten Frequenzen ist, desto genauer kann die temperaturabhängige Resonanzfrequenz und somit auch die aktuelle Temperatur innerhalb des Küchengerätes bzw. des Gargutes bestimmt werden. Vorteilhaft ist es dabei auch, mehrere Temperatursensoren für unterschiedliche Temperaturbereiche gleichzeitig zu verwenden. Diese Temperatursensoren können bspw. innerhalb eines gemeinsamen Temperaturfühlers zusammengefasst sein, wobei diese bspw. linear über eine Längserstreckung des Temperaturfühlers positioniert sein können, so dass ein Temperaturgradient zwischen von den Temperatursensoren ermittelten Temperaturen festgestellt werden kann oder auch ein kältester Bereich innerhalb des Gargutes ermittelt werden kann. Vorteilhaft ist dabei, dass der Temperaturfühler in jedem Fall eine aktuelle Temperatur des Gargutes misst, ohne dass der Temperaturfühler örtlich exakt innerhalb des Gargutes positioniert sein muss.

Des Weiteren ist vorgesehen, dass für das Ermitteln der aktuellen Temperatur die Signalintensitäten der Antwortsignale gemessen werden, daraus das Antwortsignal mit der größten Signalintensität ermittelt wird und die Frequenz dieses Antwortsignals mit temperaturabhängigen Resonanzfrequenzen des Temperatursensors verglichen wird. Je mehr Antwortsignale für diese Auswertung zur Verfügung stehen, mit desto größerer Messgenauigkeit kann die aktuelle Temperatur ermittelt werden. Die temperaturabhängigen Resonanzfrequenzen des Temperatursensors bzw. der Temperatursensoren werden vorteilhaft in einer Tabelle hinterlegt.

Gemäß der Erfindung übermittelt die Sende-Empfangs-Einrichtung zumindest Teilinformationen des Antwortsignals und/oder den Betrag der aktuellen Temperatur an ein weiteres Küchengerät oder einen externen Rechner. Hierzu werden Kommunikationsschnittstellen des ersten Küchengerätes sowie des weiteren Küchengerätes und/oder des externen Rechners verwendet. Die Schnittstelle kann grundsätzlich eine kabellose oder kabelgebundene Schnittstelle sein, wobei eine kabellose Übermittlung der Daten besonders komfortabel für den Nutzer ist. Insbesondere kann die Übermittlung mittels WLAN, Bluetooth oder weiterer Funknetzwerke erfolgen.

Besonders vorteilhaft steuert der externe Rechner oder die Steuereinrichtung des weiteren Küchengerätes in Abhängigkeit von der ermittelten aktuellen Temperatur einen Zubereitungsschritt des weiteren Küchengerätes. Im erstgenannten Fall funktioniert der externe Rechner als zwischengeschaltete Steuereinrichtung, so dass das weitere Küchengerät keine entsprechenden Verfahrensschritte steuern muss.

Schließlich ist neben dem vorgeschlagenen Verfahren zur Messung einer Temperatur innerhalb eines Küchengerätes auch ein System zur Durchführung eines solchen Verfahrens vorgesehen, wobei das System ein Küchengerät, insbesondere eine elektrisch betriebene Küchenmaschine, mit einer Steuereinrichtung zur Steuerung einer Zubereitung eines in einem Zubereitungsgefäß enthaltenen Gargutes und mit einer Kommunikationsschnittstelle zum Senden und/oder Empfangen von Daten, mindestens einen relativ zu dem Küchengerät bewegbaren Temperatursensor, insbesondere akustischen Oberflächenwellensensor (SAW-Sensor), sowie mindestens eine relativ zu dem Küchengerät bewegbare Sende-Empfangs-Einrichtung aufweist, wobei der Temperatursensor via der Sende-Empfangs-Einrichtung mit dem Küchengerät verbindbar ist, und wobei die Steuereinrichtung ausgebildet ist, in Abhängigkeit von einer via der Kommunikationsschnittstelle an die Steuereinrichtung übermittelten aktuellen Temperatur einen Zubereitungsschritt des Küchengerätes zu steuern.

Gemäß der Erfindung weist das System ein Küchengerät wie bspw. eine elektrisch betriebene Küchenmaschine, mindestens eine Sende-Empfangs-Einrichtung und mindestens einen Temperatursensor auf. Die Sende-Empfangs-Einrichtung sowie der Temperatursensor sind relativ zu dem Küchengerät beweglich und somit besonders einfach und unkompliziert in den gewünschten Messort einzubringen. Das Küchengerät, das heißt bspw. ein auf einer Arbeitsplatte stehendes Kochmixgerät, kann unverändert an diesem Ort stehenbleiben, während der Nutzer den Temperatursensor an den gewünschten Messort bringt, bspw. in ein mit Gargut gefülltes Gargutgefäß, welches in einem anderes Küchengerät, bspw. einem Backofen, angeordnet ist. Die Sende-Empfangs-Einrichtung ordnet der Nutzer vorteilhaft außerhalb des Küchengerätes (Backofens) an, vorteilhaft so, dass die Entfernung zwischen dem Temperatursensor und der Sende-Empfangs-Einrichtung noch eine Kommunikationsverbindung zwischen diesen zulässt. Falls der Temperatursensor und die Sende-Empfangs-Einrichtung bspw. mittels einer Bluetooth-Verbindung miteinander kommunizieren, darf die Entfernung die maximale Reichweite des Netzwerkes nicht überschreiten. Gleiches gilt für die Entfernung zwischen dem Küchengerät und der Sende-Empfangs-Einrichtung, wobei auf Grund der in der Praxis größeren Entfernungen ein WLAN-Netzwerk oder ein anderes Funknetzwerk mit ähnlicher Reichweite empfohlen wird. Zusätzlich kann das System auch einen externen Rechner aufweisen oder mit einem externen Rechner kommunizieren, welcher in Kommunikationsverbindung zwischen dem Küchengerät und der Sende-Empfangs-Einrichtung angeordnet ist. Der externe Rechner kann dabei als Zwischenstation dienen, welche eine Vielzahl von unterschiedlichen Aufgaben wahrnehmen kann, bspw. Signalverstärkung, Anzeige der gemessenen Temperatur auf einem Display, Auswertung der Antwortsignale oder Teilinformationen der Antwortsignale.

Insgesamt ist eine Temperaturmesseinrichtung geschaffen, welche kabellos funktioniert, deren Temperatursensor keine aktive Elektronik wie bspw. einen Akkumulator oder ähnliches erfordert und unterschiedliche Küchengeräte kommunikationstechnisch miteinander verbinden kann. Das Küchengerät, welches Teil des erfindungsgemäßen Systems ist (vorzugsweise eine elektrisch betriebene Küchenmaschine), kann Zubereitungsschritte zur Zubereitung eines Gargutes auf eine aktuelle Temperatur des Gargutes innerhalb des weiteren Küchengerätes abstimmen. Das weitere Küchengerät kann bspw. ein Backofen, ein Grill, ein Herd, ein Kochtopf oder ähnliches sein. Ebenso ist es auch möglich, dass das weitere Küchengerät ein Teilbereich des ersten Küchengerätes, bspw. ein Garaufsatz, ist.

Die Sende-Empfangs-Einrichtung ist so ausgebildet, dass diese besonders einfach an einem Küchengerät angeordnet werden kann. Beispielsweise kann diese einen hakenförmigen Endbereich aufweisen, welcher über einen Türgriff einer Backofentür oder ähnliches gehängt werden kann. Die Sende-Empfangs-Einrichtung kann eine aktive Elektronik aufweisen. Vorteilhaft weist diese bspw. einen wiederaufladbaren Akkumulator, einen digitalen Signalprozessor (DSP), einen Datenspeicher, ein Kommunikationsmodul, eine Ladeelektronik oder ähnliches auf.

Das System kann entweder nur eine einzige Sende-Empfangs-Einrichtung oder mehrere Sende-Empfangs-Einrichtungen aufweisen, wobei im Falle mehrerer Temperatursensoren innerhalb des Systems jedem Temperatursensor eine eigene Sende-Empfangs-Einrichtung zugeordnet sein kann. Vorteilhaft sind jedoch mehrere Temperatursensoren einer gemeinsamen Sende-Empfangs-Einrichtung zugeordnet.

Sofern das System mehrere Temperatursensoren aufweist, können diese für unterschiedliche Temperaturbereiche eingesetzt werden. Dabei können mehrere Temperatursensoren zu einem gemeinsamen Temperaturfühler zusammengefasst sein. Falls der Temperaturfühler, ähnlich einer Sonde, bspw. eine längliche Erstreckung aufweist, können mehrere Temperatursensoren linear über dessen Längserstreckung angeordnet sein. Mit dieser Anordnung lässt sich unter anderem ein Temperaturgradient innerhalb des Temperaturfühlers, und damit auch innerhalb des damit gemessenen Gargutes messen, wobei gleichzeitig auch die kälteste Stelle erkannt werden kann.

Zur Aufbewahrung des Temperaturfühlers oder separater Temperatursensoren bei Nichtgebrauch kann dieser bzw. können diese bspw.in einer Aussparung des Gehäuses der Sende-Empfangs-Einrichtung oder auch in dem Küchengerät oder einem Zubehör für das Küchengerät angeordnet werden.

Es wird vorgeschlagen, dass das System ein in dem Küchengerät anordenbares Zubereitungsgefäß, einen in dem Zubereitungsgefäß anordenbaren Spatel, einen mit einem Rührwerk des Küchengerätes verbindbaren Messersatz oder Milchaufschäumer oder einen mit dem Zubereitungsgefäß verbindbaren Garaufsatz aufweist, wobei der Temperatursensor in oder an dem Zubereitungsgefäß, dem Spatel, dem Messersatz, dem Milchaufschäumer und/oder dem Garaufsatz angeordnet ist. Das Zubereitungsgefäß, der Spatel, der Messersatz, der Milchaufschäumer und/oder der Garaufsatz sind dabei Zubehör im Sinne der vorgenannten Ausführungen. Gemäß dieser Ausführung ist der Temperatursensor in Kombination mit dem vorgenannten Zubehör relativ zu dem Küchengerät bewegbar. Vorteilhaft ist dabei, dass der Temperatursensor durch die Anordnung des Zubehörs an dem Küchengerät automatisch so positioniert wird, dass der Temperatursensor in dem zuzubereitenden Gargut angeordnet ist und somit die aktuelle Temperatur des Gargutes messen kann. Es empfiehlt sich, dass der Temperatursensor in dem genannten Zubehör an einer Stelle angeordnet ist, welche bei einer üblichen Benutzung in Kontakt mit dem zuzubereitenden Gargut gelangt.

Die Anordnung des Temperatursensors in dem Zubereitungsgefäß, dem Spatel, dem Messersatz, dem Milchaufschäumer und/oder dem Garaufsatz oder weiteren Zubehörelementen kann entweder reversibel oder nicht reversibel sein. Im erstgenannten reversiblen Fall ist es möglich, das Zubehörelement nur dann mit einem Temperatursensor auszustatten, wenn eine Temperaturmessung vorgenommen werden soll. Ansonsten ist es bspw. möglich, den Temperatursensor von dem Zubehörelement zu entfernen, um eine Reinigung des Zubehörelementes durchführen zu können. Dies betrifft insbesondere die Ausführungsformen, bei welchen der Temperatursensor außen angeordnet ist, bspw. an dem Messersatz oder dem Milchaufschäumer.

Schließlich kann das System auch eine Ladeeinrichtung für den Akkumulator der Sende-Empfangs-Einrichtung aufweisen. Die Ladeeinrichtung kann bspw. an dem Küchengerät angeordnet sein und eine geeignete Schnittstelle für die Ladekontakte des Akkumulators aufweisen. Vorteilhaft kann ein Teilbereich der Sende-Empfangs-Einrichtung formkorrespondierend in die Ladeeinrichtung eingebracht werden, so dass die Verbindung von Ladeeinrichtung und Akkumulator besonders einfach durch den Nutzer des Küchengerätes durchzuführen ist.

Im Folgenden wird die Erfindung anhand von Ausführungsbeispielen näher erläutert. Es zeigen:
- Figur 1:: ein erfindungsgemäßes System mit einem Küchengerät, einer Sende-Empfangs-Einrichtung und einem Temperatursensor (in einem weiteren Küchengerät angeordnet),
- Figur 2:: ein erfindungsgemäßes System zur Temperaturmessung wie gemäß Fig. 1, jedoch mit einem zusätzlichen externen Rechner,
- Figur 3:: ein Küchengerät mit einem einen Temperatursensor aufweisenden Spatel,
- Figur 4:: ein Küchengerät mit einem in einem Zubereitungsgefäß schwimmenden Temperatursensor,
- Figur 5:: ein Küchengerät mit einem einen Temperatursensor aufweisenden Zubereitungsgefäß,
- Figur 6:: ein Küchengerät mit einem einen Temperatursensor aufweisenden Messersatz,
- Figur 7:: ein Küchengerät mit einem einen Temperatursensor aufweisenden Milchaufschäumer,
- Figur 8:: ein Küchengerät mit einem einen Temperatursensor aufweisenden Garaufsatz,
- Figur 9:: ein Küchengerät mit einer Ladeeinrichtung für eine Sende-Empfangs-Einrichtung.

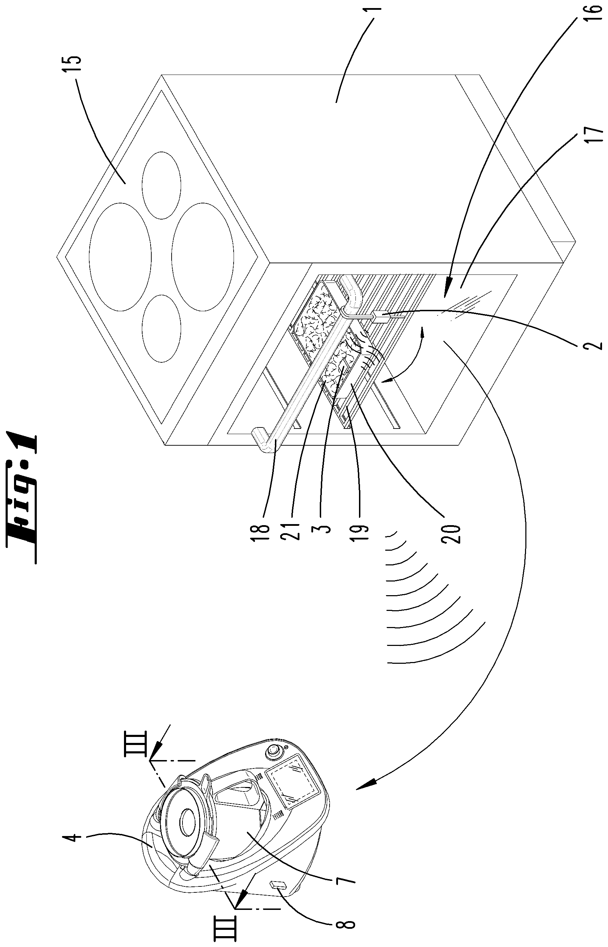

Figur 1 zeigt ein Küchengerät 1, welches einen Herd 15 und einen Backofen 16 aufweist. An dem Küchengerät 1 ist eine Backofentür 17 mit einem Türgriff 18 angeordnet. In dem Backofen 16 befindet sich ein Backofenrost 18, welches ein Gargutgefäß 20, das mit einem Gargut 21 gefüllt ist, trägt.

In dem Gargut 21 ist ein Temperatursensor 3 eingetaucht, welcher als Oberflächenwellensensor (SAW-Sensor) ausgebildet ist. An dem Türgriff 18 der Backofentür 17 ist eine Sende-Empfangs-Einrichtung 2 angeordnet, nämlich mittels eines Hakenelementes angehängt. Zur Kombination mit dem Temperatursensor 3 weist die Sende-Empfangs-Einrichtung 2 ein Kommunikationsmodul auf, sowie weitere Elektronik wie bspw. einen digitalen Signalprozessor, ein Speichermodul, einen Akkumulator und eine Ladeelektronik dafür.

Neben dem Küchengerät 1 ist ein weiteres Küchengerät 4 angeordnet, welches gemäß dem Ausführungsbeispiel eine elektrisch betriebene Küchenmaschine (Kochmixgerät) ist. In dem Küchengerät 4 ist ein Zubereitungsgefäß 7 angeordnet, in welchem ein Gargut 21 zubereitet werden kann. Eine Zubereitung innerhalb des Küchengerätes 4 kann bspw. einen Heizvorgang und/oder einen Rührvorgang enthalten. Das Küchengerät 4 ist darüber hinaus mit einer Kommunikationsschnittstelle 8 ausgestattet, welche bspw. ein Funkmodul wie ein WLAN-Modul oder ähnliches aufweist.

Das Küchengerät 4, die Sende-Empfangs-Einrichtung 2 sowie der Temperatursensor 3 bilden zusammen ein erfindungsgemäßes System zur Messung einer Temperatur innerhalb des anderen Küchengerätes 4, nämlich hier der Kombination aus dem Backofen 16 und dem Herd 15.

Die Erfindung gemäß dieser Ausführungsvariante funktioniert so, dass der Nutzer zur Messung der Temperatur des Gargutes 21 den Temperatursensor 3 in oder auf das Gargut 21 legt. Dies kann er bspw. direkt im Anschluss an die Einfüllung des Gargutes 21 in das Gargutgefäß 20 durchführen, so dass der Temperatursensor 3 bereits zu Beginn des Garprozesses in dem Gargut 21 vorhanden ist. Der Nutzer stellt das Gargutgefäß 20 wie üblich auf ein Backofenrost 19 und schiebt dieses in den Backofen 16 hinein. Anschließend schließt er die Backofentür 17 und startet den Zubereitungsvorgang. An den Türgriff 18 der Backofentür 17 hängt der Nutzer die Sende-Empfangs-Einrichtung 2, welche mit dem Temperatursensor 3 kommunizieren kann.

Obwohl in dem gezeigten Ausführungsbeispiel nur ein Temperatursensor 3 dargestellt ist, ist es selbstverständlich auch möglich, eine Mehrzahl von Temperatursensoren 3 in dem Gargut 21 oder in dem Backofen 16 anzuordnen, um eine Temperatur an unterschiedlichen Orten messen zu können. Dabei kann jedem Temperatursensor 3 grundsätzlich eine eigene Sende-Empfangs-Einrichtung 2 zugeordnet sein. Vorteilhaft ist es jedoch, dass eine einzige Sende-Empfangs-Einrichtung 2 mit mehreren bzw. allen Temperatursensoren 3 kommunizieren kann.

Der Temperatursensor 3 ist im gezeigten Ausführungsbeispiel ein Oberflächenwellensensor (SAW-Sensor), an dessen Oberfläche in Abhängigkeit von der Temperatur akustische Oberflächenwellen angeregt werden können. Dazu verfügt der Temperatursensor 3 über eine Bauteilstruktur, welche eine temperaturabhängige Resonanzfrequenz aufweist, das heißt temperaturabhängig eine bestimmte Frequenz verstärkt.

Zusätzlich bereitet der Nutzer - abhängig von einem Kochrezept, nach welchem er das Gargut 21 zubereiten möchte - das Küchengerät 4, nämlich die Küchenmaschine, vor. Beispielsweise kann der Nutzer das Zubereitungsgefäß 7 des Küchengerätes 4 mit einer Zutat füllen, welche nach abgeschlossener Zubereitung des Gargutes 21 mit diesem gemischt werden soll. Beispielsweise kann es vorgesehen sein, dass das Gargut 21 und die innerhalb des Zubereitungsgefäßes 7 des Küchengerätes 4 enthaltene Zutat eine bestimmte Temperatur bei deren Mischung aufweisen sollen oder gemeinsam weiter erhitzt werden sollen, so dass es vorteilhaft ist, die in dem Zubereitungsgefäß 7 enthaltene Zutat bereits vor Erreichen der Endtemperatur des Gargutes 21 innerhalb des Backofens 16 oder vor dem vollendeten Zubereitungsschritt (bei vorgegebener Temperatur) vorzuwärmen.

Die Messung der Temperatur des Gargutes 21 erfolgt nun beispielsweise so, dass die Sende-Empfangs-Einrichtung 2 zeitlich aufeinander folgend eine Mehrzahl von Anregungssignalen mit voneinander abweichenden Frequenzen eines definierten Frequenzbandes aussendet. Die Frequenzen sind auf die Bauteilstruktur des Temperatursensors 3 sowie die zu erwartenden Temperaturen abgestimmt. Bspw. kann der Temperatursensor 3 auf ein ISM-Band von 433 MHz abgestimmt sein. Jedes der Anregungssignale ruft ein Antwortsignal innerhalb des Temperatursensors 3 hervor, so dass dieser entsprechend zu jedem Anregungssignal ein Antwortsignal an die Sende-Empfangs-Einrichtung 2 zurücksendet. Da in Abhängigkeit von der aktuellen Temperatur des Gargutes 21 nicht alle Frequenzen gleichmäßig innerhalb der Bauteilstruktur des Temperatursensors 3 verstärkt werden, kann aus der Signalintensität des Antwortsignals ermittelt werden, welche Temperatur das Gargut 21 derzeit aufweist. Sofern ein Anregungssignal der Sende-Empfangs-Einrichtung 2 bei einer aktuellen Temperatur mit einer Resonanzfrequenz des Temperatursensors 3 korrespondiert, ist die Signalintensität dieses Antwortsignals höher als die Signalintensitäten der Antwortsignale mit davon abweichenden Frequenzen. Die durch die Sende-Empfangs-Einrichtung 2 von dem Temperatursensor 3 empfangenen Antwortsignale werden bspw. innerhalb eines Datenspeichers der Sende-Empfangs-Einrichtung 2 gespeichert und anschließend innerhalb eines digitalen Signalprozessors der Sende-Empfangs-Einrichtung 2 ausgewertet. Aus den gespeicherten Antwortsignalen wird das Antwortsignal mit der größten Signalintensität ermittelt und anschließend die Frequenz dieses Antwortsignals mit temperaturabhängigen Resonanzfrequenzen des Temperatursensors 3 verglichen. Sofern das intensitätsstärkste Antwortsignal mit einer gespeicherten Resonanzfrequenz übereinstimmt, kann die Temperatur zuverlässig ermittelt werden. Dabei ist das Messergebnis umso aussagekräftiger, je größer die Anzahl der Anregungssignale innerhalb des definierten Frequenzbandes ist.

Anschließend sendet die Sende-Empfangs-Einrichtung 2 den Betrag der ermittelten aktuellen Temperatur des Gargutes 21 mittels seines Kommunikationsmoduls, bspw. eine WLAN-Moduls, an das andere Küchengerät 1, hier die Küchenmaschine. Das Küchengerät 1 empfängt diese Information mittels seiner Kommunikationsschnittstelle 8 und leitet diese an eine Steuereinrichtung des Küchengerätes 1 weiter, welche in Abhängigkeit von der Temperatur einen Zubereitungsschritt innerhalb des Zubereitungsgefäßes 7 steuert. Beispielsweise ist die Steuereinrichtung so programmiert, dass diese bei einer bestimmten Temperatur des Gargutes 21 eine Heizeinrichtung des Küchengerätes 1 aktiviert, so dass die innerhalb des Zubereitungsgefäßes 7 enthaltene Zutat erhitzt wird.

Sofern die vorgegebene Temperatur aktuell noch nicht erreicht ist, werden die zuvor erläuterten Messschritte erneut durchgeführt.

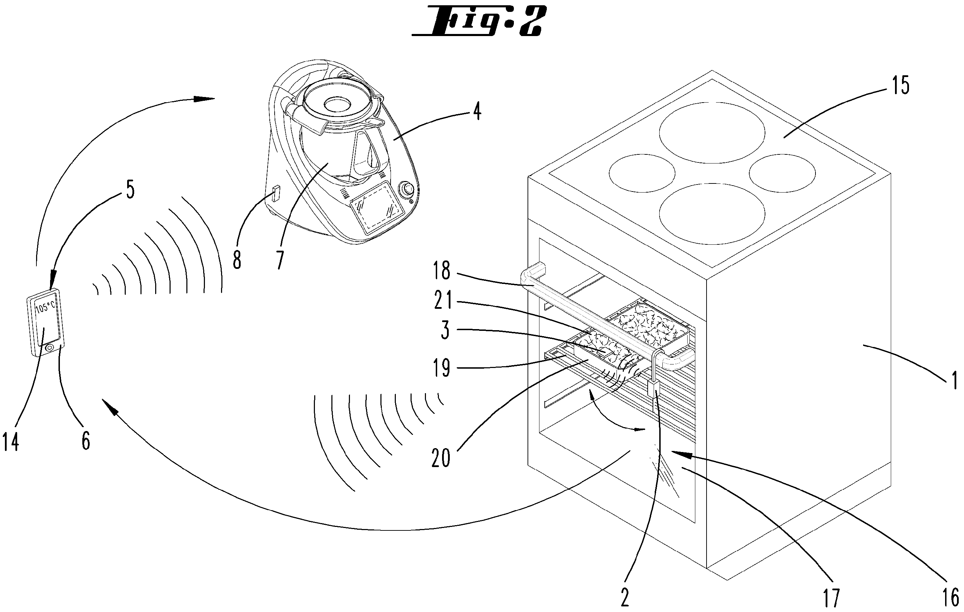

Figur 2 zeigt ein weiteres Ausführungsbeispiel der Erfindung, bei welchem in Kommunikationsverbindung zwischen der Sende-Empfangs-Einrichtung 2 und dem weiteren Küchengerät 1, nämlich hier der Küchenmaschine, ein externer Rechner 5, nämlich der Rechner 5 eines mobilen Endgerätes 6, angeordnet ist. Das mobile Endgerät 6 ist bspw. wie dargestellt ein Smartphone, kann jedoch alternativ auch ein Laptop oder ähnliches sein. Gemäß dieser Ausführungsvariante kommuniziert die Sende-Empfangs-Einrichtung 2 nicht direkt mit dem weiteren Küchengerät 4, sondern stattdessen mit dem Rechner 5 des mobilen Endgerätes 6. Dabei funktioniert die Erfindung bspw. so, dass die Sende-Empfangs-Einrichtung 2 die von dem Temperatursensor 3 übermittelten Antwortsignale nicht selbst auswertet, sondern die Antwortsignale oder zumindest relevante Teilinformationen der Antwortsignale an den Rechner 5 des mobilen Endgerätes 6 übermittelt. Die Auswertung erfolgt dann innerhalb des Rechners 5 des mobilen Endgerätes 6. Beispielsweise ist es möglich, dass die Antwortsignale gar nicht mehr in einem Speichermodul der Sende-Empfangs-Einrichtung 2 gespeichert werden, sondern nur an das mobile Endgerät 6 weitergeleitet werden. Alternativ ist es nach einer weiteren Ausführungsvariante jedoch auch möglich, dass die Antwortsignale innerhalb des Speichermoduls der Sende-Empfangs-Einrichtung 2 abgespeichert werden und eine Teilauswertung innerhalb des digitalen Signalprozessors der Sende-Empfangs-Einrichtung 2 erfolgt. Beispielsweise kann die Auswertung beinhalten, dass aus einer Mehrzahl von Antwortsignalen des definierten Frequenzbandes das Antwortsignal mit der größten Signalintensität ermittelt wird. Diese Teilinformation kann sodann mittels der Sende-Empfangs-Einrichtung 2 an den Rechner 5 des mobilen Endgerätes 6 übermittelt werden, welche anschließend die weitere Auswertung übernimmt. Die weitere Auswertung beinhaltet dabei, dass die Frequenz dieses Antwortsignals mit temperaturabhängigen Resonanzfrequenzen des Temperatursensors 3 verglichen wird, welche innerhalb eines Datenspeichers des mobilen Endgerätes 6 hinterlegt sind. Bei Übereinstimmung der Frequenz mit einer der hinterlegten Resonanzfrequenzen kann auf die aktuelle Temperatur des Gargutes 21 geschlossen werden. Daraufhin steuert der externe Rechner 5 des mobilen Endgerätes 6 das Küchengerät 4 so, dass ein entsprechender Zubereitungsschritt innerhalb des weiteren Küchengerätes 4 gesteuert wird.

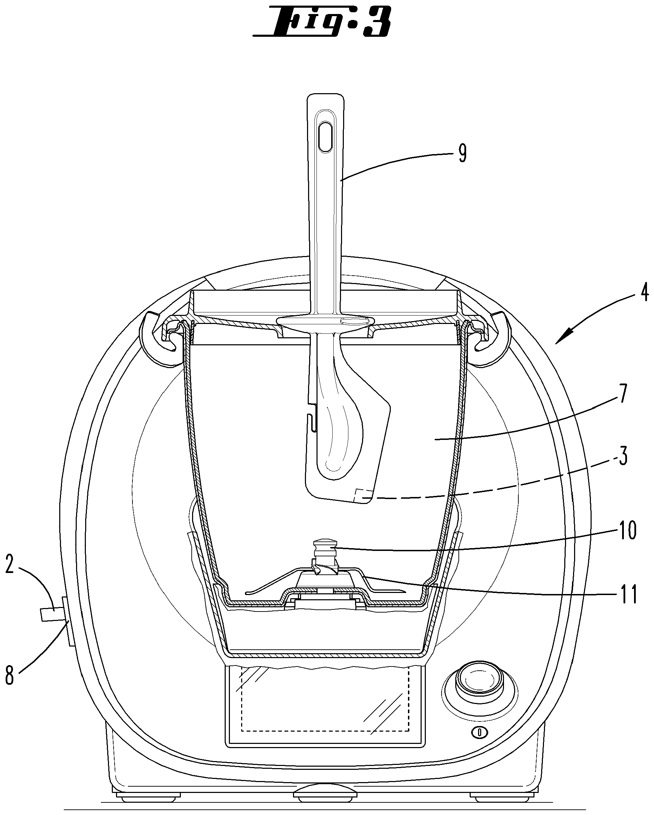

Die Figuren 3 bis 8 zeigen unterschiedliche Möglichkeiten zur Positionierung eines Temperatursensors 3 zur Messung einer Temperatur eines Gargutes 21. Der Temperatursensor 3 ist in den gezeigten Ausführungsbeispielen in einem Küchengerät 4 angeordnet, welches hier als elektrisch betriebenes Kochmixgerät ausgebildet ist. Die in dem Küchengerät 4 gemessene aktuelle Temperatur kann zur Steuerung eines Zubereitungsschrittes in demselben Küchengerät 4 oder auch einem anderen Küchengerät 1, bspw. einer weiteren Küchenmaschine oder einem Backofen 16, Herd 15 oder ähnlichem verwendet werden. Grundsätzlich sind eine Vielzahl von unterschiedlichen Küchengeräten 1, 4 im Sinne der Erfindung kombinierbar. Wesentlich ist, dass diese kompatibel mit dem erfindungsgemäßen System zur Messung einer Temperatur sind, so dass Zubereitungsschritte innerhalb eines ersten Küchengerätes 1, 4 mit Zubereitungsschritten innerhalb eines anderen Küchengerätes 1, 4 abgestimmt werden können.

Figur 3 zeigt einen Spatel 9, in welchem ein Temperatursensor 3 angeordnet ist. Der Temperatursensor 3 ist dabei in das Material des Spatels 9 eingebettet, so dass dieser nicht unmittelbar in Kontakt mit einer in dem Zubereitungsgefäß 7 enthaltenen Speise tritt. Vorteilhaft weist der Spatel 9 ein wärmeleitendes Material auf, so dass die Temperatur der innerhalb des Zubereitungsgefäßes 7 enthaltenen Speise auf den Temperatursensor 3 übertragen wird. Alternativ ist es grundsätzlich auch möglich, den Temperatursensor 3 außen an der Oberfläche des Spatels 9 anzubringen. Dabei empfiehlt es sich, dass der Temperatursensor 3 entfernbar an dem Spatel 9 angeordnet ist, so dass dieser bei einer Reinigung des Spatels 9 nicht hinderlich ist. Das Küchengerät 4 weist zudem eine Kommunikationsschnittstelle 8 auf, mit welcher eine Sende-Empfangs-Einrichtung 2 verbunden ist. Die Verbindung kann entweder kabellos erfolgen, indem die Sende-Empfangs-Einrichtung 2 nicht in physikalischem Kontakt mit der Kommunikationsschnittstelle 8 steht. Alternativ ist es - wie in der Figur gezeigt - jedoch auch möglich, dass die Sende-Empfangs-Einrichtung 2 einen Anschluss aufweist, welcher mit der Kommunikationsschnittstelle 8 korrespondiert, so dass die Sende-Empfangs-Einrichtung 2 in die Kommunikationsschnittstelle 8 des Küchengerätes 4 eingesteckt werden kann. Im Übrigen erfolgt die Messung der aktuellen Temperatur mittels des Temperatursensors 3 wie zuvor in Bezug auf die Figuren 1 und 2 beschrieben.

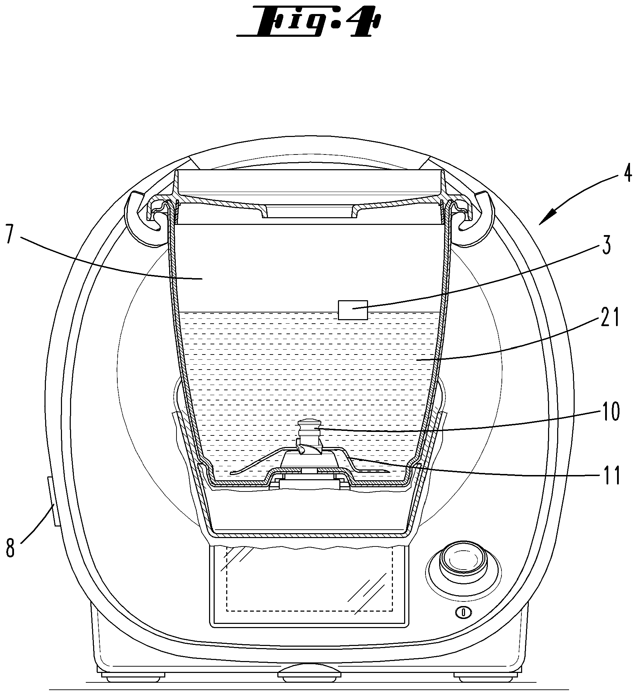

Figur 4 zeigt einen Temperatursensor 3, welcher innerhalb des Zubereitungsgefäßes 7 des Küchengerätes 4 auf bzw. in einem zuzubereitenden Gargut 21 schwimmt. Das Gargut 21 kann bspw. eine Suppe, ein Eintopf oder ähnliches sein. Der Temperatursensor 3 ist vorteilhaft als Schwimmer ausgebildet, welcher ein wasserdichtes Gehäuse aufweist, das eine möglichst große mit dem Gargut 21 in Kontakt stehende Oberfläche aufweist. Der Temperatursensor 3 steht in Kommunikationsverbindung mit einer nicht gezeigten Sende-Empfangs-Einrichtung 2, welche bspw., wie in Figur 3 dargestellt, mit der Kommunikationsschnittstelle 8 desselben Küchengerätes 4 oder auch eines weiteren Küchengerätes 1 in Kommunikationsverbindung stehen kann.

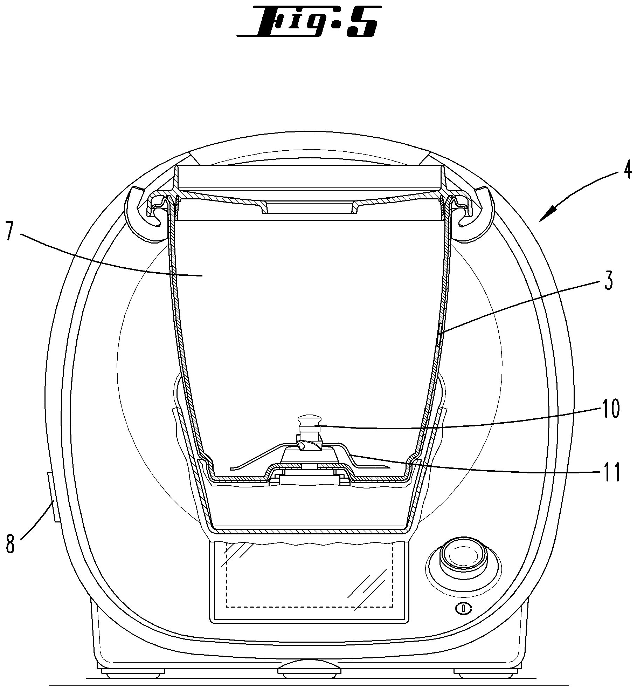

Figur 5 zeigt ein Küchengerät 4 mit einem Zubereitungsgefäß 7, in dessen Wandung ein Temperatursensor 3 angeordnet ist. Der Temperatursensor 3 ist in die Wandung des Zubereitungsgefäßes 7 eingebettet, so dass keine Kanten oder Vorsprünge in das Zubereitungsgefäß 7 ragen. Im Übrigen gelten die zuvor gemachten Ausführungen.

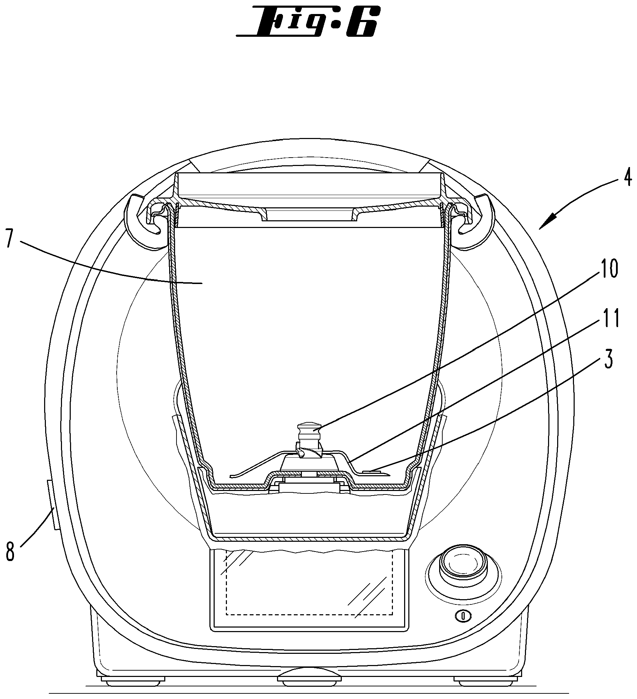

Figur 6 zeigt einen Temperatursensor 3, welcher auf einem Messersatz 11 angeordnet ist. Der Messersatz 11 ist mit einem Rührwerk 10 des Küchengerätes 4 verbunden. Der Temperatursensor 3 kann bspw. auf ein Messer des Messersatzes 11 aufgeklebt, geschweißt oder auf andere Art und Weise permanent oder entfernbar mit dem Messersatz 11 verbunden sein.

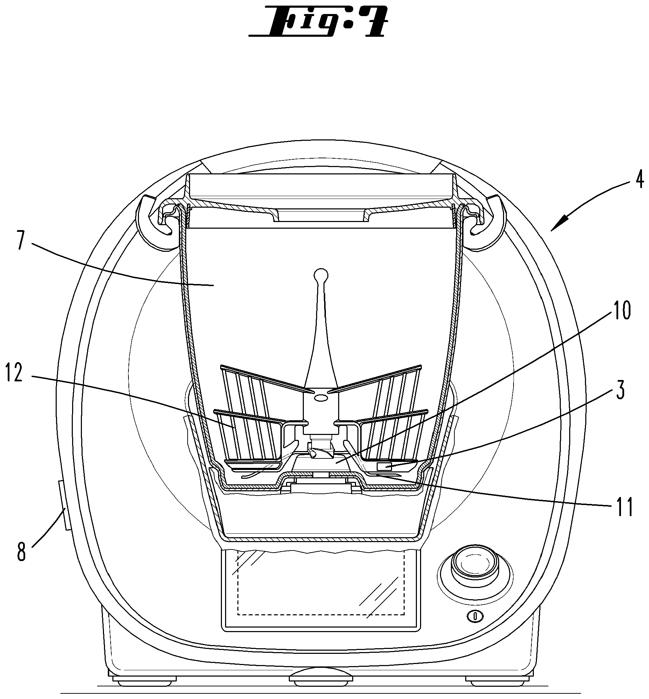

Figur 7 zeigt einen Temperatursensor 3, welcher in einem Milchaufschäumer 12 angeordnet ist. Der Milchaufschäumer 12 ist auf einen Messersatz 11 aufgesteckt, welcher wiederum mit dem Rührwerk 10 des Küchengerätes 4 verbunden ist. Der Temperatursensor 3 ist in das Material des Milchaufschäumers 12 eingebettet.

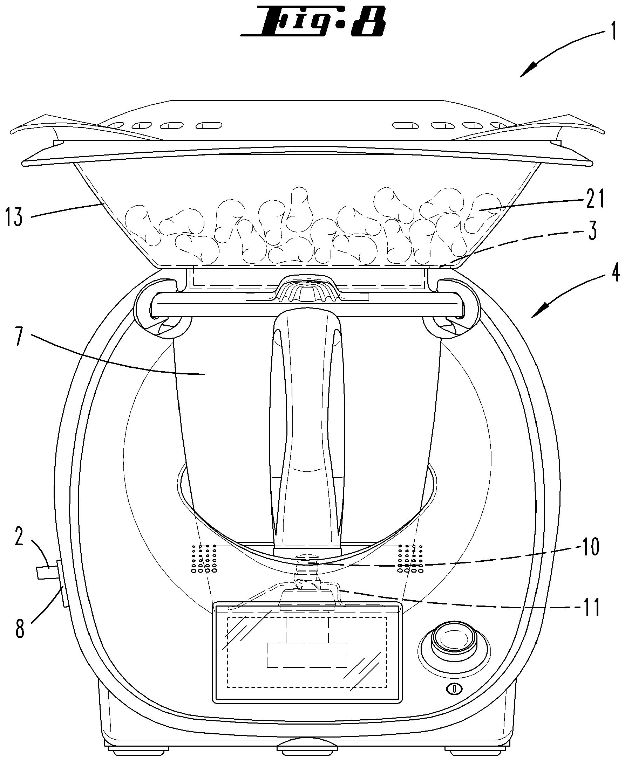

Figur 8 zeigt ein Küchengerät 4 mit einem Zubereitungsgefäß 7, auf welches ein Garaufsatz 13 als weiteres Küchengerät 1 aufgesetzt ist. In dem Garaufsatz 13 enthaltenes Gargut 21 kann mittels in dem Zubereitungsgefäß 7 erzeugtem Dampf gegart werden. Dabei strömt Dampf aus dem Zubereitungsgefäß 7 in den Garaufsatz 13 und durchsetzt das darin enthaltene Gargut 21. In einer Wandung des Garaufsatzes 13 ist ein Temperatursensor 3 angeordnet, insbesondere in das Material der Wandung eingebettet. Eine mit einer Kommunikationsschnittstelle 8 des Küchengerätes 4 verbundene Sende-Empfangs-Einrichtung 2 übermittelt Anregungssignale an den Temperatursensor 3, welcher diese mit Antwortsignalen beantwortet. Die Sende-Empfangs-Einrichtung 2 empfängt diese Antwortsignale und gibt diese via der Kommunikationsschnittstelle 8 an eine Steuer- und Auswerteeinrichtung des Küchengerätes 4 weiter, welche die Antwortsignal auswertet und bspw. die Temperatur einer dem Zubereitungsgefäß 7 zugeordneten Heizeinrichtung entsprechend steuert. Dadurch kann besonders vorteilhaft ein Regelkreis geschaffen werden, um das in dem Garaufsatz 13 enthaltene Gargut 21 bei einer konstanten Temperatur zu garen. Sofern der Temperatursensor 3 bspw. ein Absinken der Temperatur innerhalb des Garaufsatzes 13 misst, wird die Heizeinrichtung des Zubereitungsgefäßes 7 so gesteuert, dass innerhalb des Zubereitungsgefäßes 7 mehr Dampf erzeugt wird.

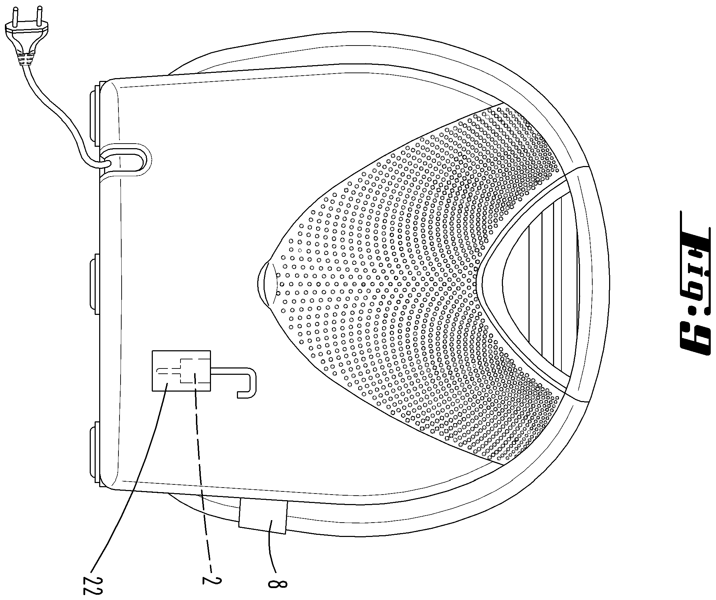

Figur 9 schließlich zeigt eine Rückseite eines Küchengerätes 4, an welcher eine Ladeeinrichtung 22 zum Wiederaufladen des Akkumulators einer Sende-Empfangs-Einrichtung 2 angeordnet ist. Die Ladeeinrichtung 22 ist so ausgebildet, dass die Sende-Empfangs-Einrichtung 2 zumindest teilweise darin eingebracht werden kann. Insbesondere empfiehlt sich eine formkorrespondierende Halterung der Sende-Empfangs-Einrichtung 2, welche für den Nutzer des Küchengerätes 4 besonders komfortabel ist.

### Bezugszeichenliste:

- 1: Küchengerät
- 2: Sende-Empfangs-Einrichtung
- 3: Temperatursensor
- 4: Küchengerät
- 5: Rechner
- 6: Mobiles Endgerät
- 7: Zubereitungsgefäß
- 8: Kommunikationsschnittstelle
- 9: Spatel
- 10: Rührwerk
- 11: Messersatz
- 12: Milchaufschäumer
- 13: Garaufsatz
- 14: Display
- 15: Herd
- 16: Backofen
- 17: Backofentür
- 18: Türgriff
- 19: Backofenrost
- 20: Gargutgefäß
- 21: Gargut
- 22: Ladeeinrichtung

## Patentansprüche

1. Verfahren zur Messung einer Temperatur innerhalb eines ersten Küchengerätes (1) und zur Steuerung eines zweiten Küchengerätes mit den Verfahrensschritten: Senden eines elektromagnetischen Anregungssignals mittels einer Sende-Empfangs-Einrichtung (2), Empfangen des Anregungssignals durch einen in dem Küchengerät (1) angeordneten Temperatursensor (3), Senden eines temperaturabhängigen Antwortsignals durch den Temperatursensor (3), Empfangen des Antwortsignals durch die Sende-Empfangs-Einrichtung (2), Ermitteln der aktuellen Temperatur durch Vergleichen des Antwortsignals mit temperaturabhängigen Referenzsignalen, **dadurch gekennzeichnet, dass** die Sende-Empfangs-Einrichtung (2) Teilinformationen des Antwortsignals an eine Steuereinrichtung eines weiteren, zweiten Küchengerätes (4) zur Weiterverwendung in dem zweiten Küchengerät übermittelt und die Küchengeräte abgestimmt so gesteuert werden, dass eine möglichst kurze Gesamtzubereitungszeit für die Zubereitung einer Speise entsteht.

2. Verfahren nach Anspruch 1, **dadurch gekennzeichnet, dass** durch das Anregungssignal temperaturabhängige akustische Oberflächenwellen (SAW) in dem Temperatursensor (3) angeregt werden, welche Teil des Antwortsignals sind.

3. Verfahren nach Anspruch 1 oder 2, **dadurch gekennzeichnet, dass** zeitlich aufeinanderfolgend eine Mehrzahl von Anregungssignalen mit voneinander abweichenden Frequenzen eines definierten Frequenzbandes gesendet wird.

4. Verfahren nach Anspruch 3, **dadurch gekennzeichnet, dass** für das Ermitteln der aktuellen Temperatur die Signalintensitäten der Antwortsignale gemessen werden, daraus das Antwortsignal mit der größten Signalintensität ermittelt wird und die Frequenz dieses Antwortsignals mit temperaturabhängigen Resonanzfrequenzen des Temperatursensors (3) verglichen wird.

5. Verfahren nach einem der vorhergehenden Ansprüche, **dadurch gekennzeichnet, dass** das Ermitteln der aktuellen Temperatur zumindest teilweise innerhalb des ersten Küchengerätes (1) und/oder des zweiten Küchengerätes (4) und/oder eines externen Rechners (5) erfolgt.

6. Verfahren nach einem der vorhergehenden Ansprüche, **dadurch gekennzeichnet, dass** das zweite Küchengerät (4) eine elektrisch betriebene Küchenmaschine, insbesondere ein Kochmixgerät, ist.

7. Verfahren nach Anspruch 5, **dadurch gekennzeichnet, dass** der externe Rechner (5) ein Rechner eines mobilen Endgerätes (6), insbesondere eines Laptops oder eines Smartphones, ist.

8. Verfahren nach Anspruch 5 oder 7, **dadurch gekennzeichnet, dass** der externe Rechner (5) oder die Steuereinrichtung des zweiten Küchengerätes (4) in Abhängigkeit von der ermittelten aktuellen Temperatur einen Zubereitungsschritt des zweiten Küchengerätes (4) steuert.

9. System zur Durchführung eines Verfahrens nach einem der vorhergehenden Ansprüche, welches System mindestens ein erstes und ein zweites Küchengerät (1, 4), mit insbesondere einer elektrisch betriebene Küchenmaschine, mit einer Steuereinrichtung zur Steuerung einer Zubereitung eines in einem Zubereitungsgefäß (7) enthaltenen Gargutes (21) und einer Kommunikationsschnittstelle (8) zum Senden und/oder Empfangen von Daten, mindestens einen relativ zu dem zweiten Küchengerät (4) bewegbaren Temperatursensor (3), insbesondere akustischen Oberflächenwellensensor (SAW-Sensor), sowie mindestens eine relativ zu dem zweiten Küchengerät (4) bewegbare Sende-Empfangs-Einrichtung (2) aufweist, wobei der Temperatursensor (3) via der Sende-Empfangs-Einrichtung (2) mit dem zweiten Küchengerät (4) verbindbar ist, und wobei die Steuereinrichtung ausgebildet ist, in Abhängigkeit von einer via der Kommunikationsschnittstelle (8) an die Steuereinrichtung übermittelten aktuellen Temperatur von in dem ersten Küchengerät (1) befindlichen Gargut einen Zubereitungsschritt des zweiten Küchengerätes (4) zu steuern.

10. System nach Anspruch 9, **dadurch gekennzeichnet, dass** das System zusätzlich einen in dem Zubereitungsgefäß (7) anordenbaren Spatel (9), einen mit einem Rührwerk (10) des Küchengerätes (4) verbindbaren Messersatz (11) oder Milchaufschäumer (12) oder einen mit dem Zubereitungsgefäß (7) verbindbaren Garaufsatz (13) aufweist, wobei der Temperatursensor (3) in oder an dem Zubereitungsgefäß (7), dem Spatel (9), dem Messersatz (11), dem Milchaufschäumer (12) und/oder dem Garaufsatz (13) angeordnet ist.

## Claims

1. A method for measuring a temperature inside a first kitchen appliance (1) and for controlling a second kitchen appliance (4) with the method steps: transmitting an electromagnetic excitation signal by means of a transmission-receiving device (2), receiving the excitation signal by a temperature sensor (3), which is arranged in the kitchen appliance (1), transmitting a temperature-dependent response signal by the temperature sensor (3), receiving the response signal by the transmission-receiving device (2), determining the current temperature by comparing the response signal to temperature-dependent reference signals, **characterized in that** the transmission-receiving device (2) transmits partial information of the response signal to a control device of a further, second kitchen appliance (4) for further use in the second kitchen appliance and that the kitchen appliances are coordinated such controlled, that the shortest possible total preparation time for the preparation of a food arises.

2. The method according to claim 1, **characterized in that** the response signal excites temperature-dependent acoustic surface waves (SAW), which are a part of the response signal, in the temperature sensor (3).

3. The method according to claim 1 or 2, **characterized in that** a plurality of excitation signals comprising different frequencies of a defined frequency band are transmitted in succession.

4. The method according to claim 3, **characterized in that**, for determining the current temperature, the signal intensities of the response signals are measured, the response signal having the largest signal intensity is determined therefrom, and the frequency of this response signal is compared to temperature-dependent resonance frequencies of the temperature sensor (3).

5. The method according to one of the preceding claims, **characterized in that** the current temperature is determined at least partially inside the kitchen appliance (1) and/or inside the second kitchen appliance (4) and/or inside an external processor (5).

6. The method according to one of the preceding claims, **characterized in that** the second kitchen appliance (4) is an electrically operated food processor, in particular a cooking mixer.

7. The method according to claim 5, **characterized in that** the external processor (5) is a processor of a mobile end device (6), in particular of a laptop or of a smartphone.

8. The method according to claim 5 or 7, **characterized in that** the external processor (5) or the control device of the second kitchen appliance (4) controls a preparation step of the second kitchen appliance (4) as a function of the determined current temperature.

9. A system for carrying out a method according to one of the preceding claims, said system having at least a first and a second kitchen appliance (1, 4) with in particular an electrically operated kitchen machine, with a control device for controlling a preparation of an item to be cooked (21) in a preparation vessel (7) and comprising a communication interface (8) for transmitting and/or receiving data, at least one temperature sensor (3), which can be moved relative to the second kitchen appliance (4), in particular an acoustic surface wave sensor (SAW sensor), as well as at least one transmission-receiving device (2), which can be moved relative to the second kitchen appliance (4), wherein the temperature sensor (3) can be connected to the second kitchen appliance (4) via the transmission-receiving device (2), and wherein the control device is embodied to control a preparation step of the second kitchen appliance (4) as a function of a current temperature of an item to be cooked in the first kitchen appliance (1), which is transmitted to the control device via the communication interface (8).

10. The system according to claim 9, **characterized in that** the system additionally has a spatula (9) which can be arranged in the preparation vessel (7), a knife set (11) or milk frother (12), which can be connected to a mixer (10) of the kitchen appliance (4), or a cooking attachment (13), which can be connected to the preparation vessel (7), wherein the temperature sensor (3) is arranged in or on the preparation vessel (7), the spatula (9), the knife set (11), the milk frother (12) and/or the cooking attachment (13).

## Revendications

1. Procédé de mesure d'une température dans un premier appareil de cuisine (1) et de commande d'un deuxième appareil de cuisine comprenant les étapes du procédé: envoi d'un signal d'excitation électromagnétique au moyen d'un dispositif d'émission-réception (2), réception du signal d'excitation par un capteur de température (3) agencé dans l'appareil de cuisine (1), envoi d'un signal de réponse dépendant de la température par le capteur de température (3), réception du signal de réponse par le dispositif d'émission-réception (2), détermination de la température actuelle par comparaison du signal de réponse avec des signaux de référence dépendant de la température, **caractérisé en ce que** le dispositif d'émission-réception (2) transmet des informations partielles du signal de réponse à un dispositif de commande d'un autre, deuxième appareil de cuisine (4) pour réutilisation dans le deuxième appareil de cuisine et les appareils de cuisine sont commandés d'une manière coordonnée de manière que le temps de préparation global pour préparer un plat soit le plus court possible.

2. Procédé selon la revendication 1, **caractérisé en ce que** des ondes acoustiques de surface (SAW) dépendantes de la température, qui font partie du signal de réponse, sont excitées dans le capteur de température (3) par le signal d'excitation.

3. Procédé selon la revendication 1 ou 2, **caractérisé en ce que** sont envoyés successivement dans le temps une pluralité de signaux d'excitation ayant des fréquences d'une bande de fréquences définie qui diffèrent les unes des autres.

4. Procédé selon la revendication 3, **caractérisé en ce que**, pour déterminer la température actuelle, les intensités de signal des signaux de réponse sont mesurées, le signal de réponse ayant la plus grande intensité de signal est déterminé parmi eux et la fréquence de ce signal de réponse est comparée à des fréquences de résonance dépendant de la température du capteur de température (3).

5. Procédé selon l'une des revendications précédentes, **caractérisé en ce que** la détermination de la température actuelle s'effectue au moins partiellement dans le premier appareil de cuisine (1) et/ou le deuxième appareil de cuisine (4) et/ou un calculateur/ordinateur externe (5).

6. Procédé selon l'une des revendications précédentes, **caractérisé en ce que** le deuxième appareil de cuisine (4) est un appareil de cuisine électrique, en particulier un mixeur cuiseur.

7. Procédé selon la revendication 5, **caractérisé en ce que** le calculateur/ordinateur externe (5) est un calculateur/ordinateur d'un terminal mobile (6), en particulier d'un ordinateur portable ou d'un smartphone.

8. Procédé selon la revendication 5 ou 7, **caractérisé en ce que** le calculateur/ordinateur externe (5) ou le dispositif de commande du deuxième appareil de cuisine (4) commande une étape de préparation du deuxième appareil de cuisine (4) en fonction de la température actuelle déterminée.

9. Système pour la mise en œuvre d'un procédé selon l'une des revendications précédentes, lequel système commande au moins un premier et un deuxième appareils de cuisine (1, 4), avec en particulier un appareil de cuisine électrique, avec un dispositif de commande pour commander la préparation d'aliments à cuire (21) contenu dans un récipient de préparation (7) et une interface de communication (8) pour envoyer et/ou recevoir des données, au moins un capteur de température (3), en particulier un capteur à ondes acoustiques de surface (capteur SAW), qui est mobile relativement au deuxième appareil de cuisine (4), ainsi qu'au moins un dispositif d'émission-réception (2) mobile par rapport au deuxième appareil de cuisine (4), dans lequel le capteur de température (3) peut être relié au deuxième appareil de cuisine (4) par l'intermédiaire du dispositif d'émission-réception (2), et dans lequel le dispositif de commande est conçu pour commander une étape de préparation du deuxième appareil de cuisine (4) en fonction d'une température actuelle d'aliments à cuire situés dans le premier appareil de cuisine (1) et transmise au dispositif de commande par l'interface de communication (8).

10. Système selon la revendication 9, **caractérisé en ce que** le système comprend en outre une spatule (9) qui peut être agencée dans le récipient de préparation (7), un accessoire à lames (11) qui peut être relié à un agitateur (10) de l'appareil de cuisine (4) ou un mousseur de lait (12) ou un accessoire de cuisson (13) qui peut être relié au récipient de préparation (7), le capteur de température (3) étant agencé dans ou joint au récipient de préparation (7), à la spatule (9), à l'accessoire à lames (11), au mousseur de lait (12) et/ou à l'accessoire de cuisson (13).
